# EUROPÄISCHE PATENTSCHRIFT

(11) **EP 2 917 074 B1**
(45) Veröffentlichungstag und Bekanntmachung des Hinweises auf die Patenterteilung: **04.10.2017**
(21) Anmeldenummer: 13805752.6
(22) Anmeldetag: 16.10.2013
(51) Int. Cl.: B60R 1/08

(54) **AUTOMATISCH ABBLENDBARE RÜCKSPIEGELANORDNUNG FÜR KRAFTFAHRZEUGE SOWIE VERFAHREN ZUR HERSTELLUNG EINER SPIEGELBAUGRUPPE FÜR EINE RÜCKSPIEGELANORDNUNG**
DIMMABLE REARVIEW ASSEMBLY AND METHOD FOR PRODUCING A MIRROR ASSEMBLY & xA;FOR REAR VIEW MIRROR.
RETROVISEUR ANTI-ÉBLOUISSANT AUTOMATIQUE ET PROCEDE DE FABRICATION D'UN ENSEMBLE MIRROIR POUR UN RETROVIESUR

(30) Priorität: 06.11.2012 DE 102012220192
(43) Veröffentlichungstag der Anmeldung: 16.09.2015
(73) Patentinhaber: Magna Mirrors Holding GmbH, 63877 Sailauf (DE)
(72) Erfinder: KREBS, Peter, 63776 Mömbris (DE); FUCHS, Joachim, 97904 Dorfprozelten (DE); MARCH, Philip, 95497 Goldkronach (DE)
(74) Vertreter: Völger, Silke Beatrix
(86) Internationale Anmeldenummer: PCT/DE2013/200229
(87) Internationale Veröffentlichungsnummer: WO 2014/071937

(56) Entgegenhaltungen:
- US-A- 4 729 638
- US-A1- 2002 140 884

## Beschreibung

Die vorliegende Erfindung betrifft eine automatisch abblendbare Rückspiegelanordnung für Kraftfahrzeuge und ein Verfahren zur Herstellung einer Spiegelbaugruppe für eine Rückspiegelanordnung.

Rückspiegelanordnungen für Kraftfahrzeuge besitzen eine reflektierende Fläche, die das Beobachten des rückwärtigen Verkehrs ermöglicht. Üblicherweise sind die Rückspiegelanordnungen zusätzlich abblendbar ausgebildet. Hierdurch wird bei der Fahrt in der Dunkelheit ein Blenden durch hinterherfahrende Fahrzeuge vermieden. Bei automatisch abblendbaren Rückspiegelanordnungen messen bzw. erfassen im Spiegelgehäuse angeordnete Lichtsensoren den Helligkeitsunterschied zwischen Autovorfeld und rückwärtigem Verkehrsraum. Die Messwerte werden dann an eine Auswerte- und Steuerelektronik weitergeleitet und das Reflexionsvermögen der Spiegelanordnung entsprechend verändert. Hierbei sind sowohl elektrochrome Rückspiegelanordnungen aus einem elektrochromen Material als auch Rückspiegelanordnungen bekannt, die eine Flüssigkristallschicht aufweisen. Bei beiden Systemen ist bei Anlegen eines elektrischen Feldes das Reflexionsvermögen veränderbar ist.

Die sogenannten elektrochromen (EC) Rückspiegelanordnungen haben den Nachteil, dass diese Technologie einen hohen Stromverbrauch hat, und dass die Veränderung des Reflexionsvermögens sehr langsam ist.

Allerdings haben auch die bekannten eine Flüssigkristallschicht (LC) aufweisenden Rückspiegelanordnungen einige Nachteile. Sowohl die bekannten EC Spiegelanordnungen als auch die vorbekannten LC Spiegelanordnungen bestehen im Wesentlichen aus einer transparenten zur Sichtseite weisenden Glasscheibe, einer sogenannten dahinterliegenden EC bzw. LC Zelle und einer unteren abschließenden Glasschicht, die mit einer reflektierenden Beschichtung versehen ist. Bei der Herstellung müssen dabei die beiden Glasschichten exakt parallel beabstandet zueinander ausgerichtet und angeordnet sein. Eine sogenannte LC Spiegelanordnung ist beispielsweise aus der US 2002/0140884 A1 bekannt, wobei die Spiegelanordnung mit variabler Reflektivität unter Verwendung eines super-twisted nematische (STN) Flüssigkristallzelle ausgeführt ist. Die (STN) Flüssigkristallzelle weist im Wesentlichen den folgenden Aufbau auf. Zwischen einem Paar von transparenten Elektroden ist ein Paar einer Polymerausrichtungsschicht angordnet, die eine flüssigkristalline Schicht einschließt. Auf den zur Außenseite hin weisenden Oberflächen der Kondensatoren sind jeweils eine transparente Isolationsschicht, ein Polarisator sowie eine transparente Trägerplatte aus Glas bzw. Kunststoff angeordnet. An der nach außen weisenden rückseitigen Oberfläche der Spiegelanordnung ist zusätzlich eine Schicht aus reflektierendem Material gebildet. Insbesondere bei der Ausbildung von Rückspiegelanordnungen mit einer gewölbten Oberflächenausgestaltung sind die Fertigungskosten sehr hoch. Die Trägerplatten, die üblicherweise aus Glas ausgeführt sind, werden hierbei durch Biegen entsprechend gewölbt ausgeführt, wobei zwei Gläser hinsichtlich ihrer Krümmung exakt zueinander passen müssen. Weichen die parallel zueinander beabstandet angeordneten Gläser hinsichtlich ihrer Krümmung voneinander ab, kommt es bei der Anwendung der Rückspiegelanordnung zu unerwünschten Doppelbildern. Die Herstellung und Auswahl der hinsichtlich ihrer Krümmung zueinander passenden Glasscheiben ist daher aufwändig und teuer.

Eine LC-Spiegelanordnung mit dem vorstehend beschriebenen grundsätzlichen Aufbau ist beispielsweise aus der DE 10 2009 020 402 A1 und der DE 196 31 409 A1 bekannt.

Aufgabe der vorliegenden Erfindung ist es daher, eine automatisch abblendbare Rückspiegelanordnung für ein Kraftfahrzeug mit einer flüssigkristallinen Schicht derart weiterzubilden, dass die Rückspiegelanordnung ein geringes Gewicht aufweist, einen geringen Stromverbrauch hat und die Veränderung des Reflexionsvermögens sehr schnell erfolgt. Des Weiteren besteht die Aufgabe unter einem weiteren Aspekt der Erfindung darin, ein Verfahren zur Herstellung einer Spiegelbaugruppe anzugeben, womit die Spiegelbaugruppe kostengünstig herstellbar ist.

Diese Aufgabe wird unter einem ersten Aspekt durch die im Anspruch 1 angegebenen Merkmale gelöst. Unter einem weiteren Aspekt wird die Aufgabe durch die im Anspruch 9 angegebenen Merkmale gelöst.

Durch den im Anspruch 1 angegebenen Aufbau der Spiegelbaugruppe, wobei die zur Gehäuseseite weisende transparente Trägerschicht als optisch transparente Kunststofffolie ausgebildet ist, die eine Reflexionsschicht aufweist, lässt sich eine deutlich gewichtsreduzierte Rückspiegelanordnung ausführen. Durch die Verwendung einer Spiegelbaugruppe mit einer elektrisch ansteuerbaren Flüssigkristallzelle kann die Veränderung des Reflexionsverhaltens sehr schnell erfolgen, wobei zusätzlich ein geringer Energieverbrauch vorliegt.

Die Herstellkosten können erheblich reduziert werden, da sich die Folie hinsichtlich der Krümmung an die zur Vorderseite weisende transparente Trägerschicht, d.h. die Deckschicht der Spiegelbaugruppe aus einer Glasschicht anpassen kann. Aufgrund dieser idealen Anpassung der Folie an die Glasschicht werden Doppelbilder, optische Verzerrungen für den Fahrzeugnutzer vermieden.

In einer erfindungsgemäßen weiteren Ausführungsform der Rückspiegelanordnung ist eine rahmenlose Festlegung der Spiegelbaugruppe an dem Gehäuse vorgesehen.

Weitere vorteilhafte Ausgestaltungen und Weiterbildungen der erfindungsgemäßen Rückspiegelanordnung ergeben sich aus den Unteransprüchen.

Bevorzugte Ausführungsformen der Rückspiegelanordnung für ein Kraftfahrzeug werden nachfolgend beispielshalber beschrieben, wobei veranschaulichend auf die beigefügten Zeichnungen Bezug genommen wird.

Es zeigen:
- Fig. 1: eine schematische Ansicht einer Rückspiegelanordnung als Innenspiegelanordnung; und
- Fig. 2: einen Ausschnitt aus dem Schichtaufbau in einem Querschnitt der Spiegelbaugruppe.

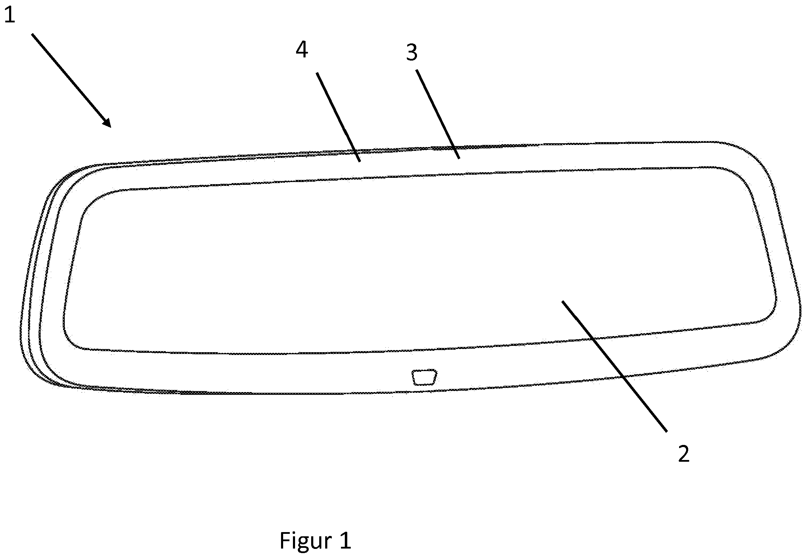

Figur 1 zeigt eine Rückspiegelanordnung 1 zum Einbau in ein Kraftfahrzeug in schematischer Darstellung in einer Vorderansicht. Eine Spiegelbaugruppe 2, mit der der nachfolgende Verkehr beobachtet werden kann, ist in einer ersten Ausgestaltung in einem Gehäuse 3 eingefasst gehalten. Das Gehäuse 3 weist hierzu einen Aufnahmeraum auf, der nach vorne hin eine Aufnahmeöffnung aufweist. Das Gehäuse 3 weist weiterhin üblicherweise ein Rahmenelement 4 auf, welches bei der Montage die Spiegelbaugruppe 2 im Randbereich klemmend fixiert. Das Gehäuse 3 ist üblicherweise mit einer Haltevorrichtung/Spiegelfuß am Innenraum d.h. am Fahrzeughimmel oder an der Windschutzscheibe eines Kraftfahrzeugs festlegbar. In das Gehäuse 3 des Innenrückspiegels ist außerdem mindestens ein Lichtsensor eingebaut, mit dem die Lichtintensität der Umgebung aus Richtung des nachfolgenden Verkehrs erfasst wird. Des Weiteren wird die Lichtintensität des Vorfeldes des Kraftfahrzeuges erfasst. In Abhängigkeit der gemessenen Signale wird dann eine Ansteuerung und Abdunkelung der Spiegelbaugruppe 2 bewirkt. Die Rückspiegelanordnung 1 kann selbstverständlich auch als Außenspiegel ausgeführt sein.

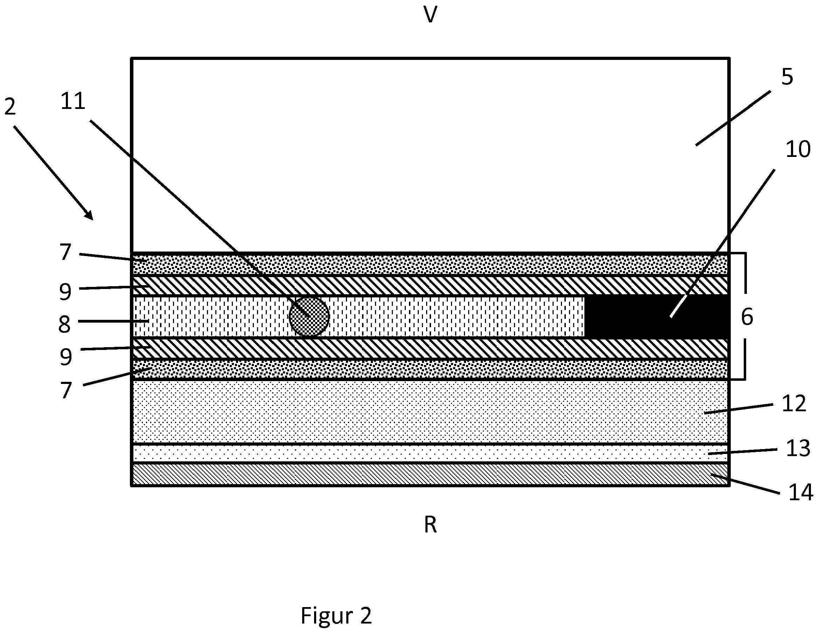

Anhand der Figur 2 wird nachfolgend der Schichtaufbau der Spiegelbaugruppe 2 beschrieben, die mit einer automatischen Abblendfunktion ausgestattet ist. Auf die Darstellung und näheren Beschreibung der die Lichtintensität erfassenden Sensoren, die Ansteuer- und Auswerteelektronik wird verzichtet. Diese ist dem Fachmann aus dem Stand der Technik bekannt. Die Darstellung der Schichten ist nicht maßstäblich, sondern nur hinsichtlich besserer Erkennbarkeit gezeichnet. Insgesamt beträgt die Schichtdicke der Spiegelbaugruppe 2 in dem dargestellten Beispiel ca. 2,2 mm. Hiervon beträgt die Schichtdicke der zur Vorderseite V weisenden transparenten Trägerschicht 5 ca 2 mm. Die Schichtdicken können auch anders ausgeführt sein. Insbesondere die Trägerschicht 5, die die Funktion des Kratzschutzes hat, kann eine andere Schichtdicke, insbesondere eine geringere Schichtdicke, aufweisen.

Zur Veränderung des Reflexionsgrades umfasst die erfindungsgemäße Spiegelbaugruppe 2 eine Flüssigkristallzelle 6, die den Kern der Spiegelbaugruppe 2 bildet. Diese ist elektrisch ansteuerbar ausgeführt. Bei dieser Technologie basierend auf Flüssigkristallen wird der Effekt ausgenutzt, dass bei Anlegen eines elektrischen Feldes an die Flüssigkristallzelle sich die Flüssigkristallmoleküle parallel zum elektrischen Feld orientieren. Im Grundzustand, das heißt ohne ein elektrisches Feld sind die Flüssigkristallmoleküle, die mit Farbpigmenten versehen sind, in Längsrichtung d.h. Durchtrittsrichtung des Lichtes ausgerichtet. Um diese Ausrichtung zu erhalten sind die Ausrichtschichten vorgesehen.

Die Flüssigkristallzelle 6 besteht hierbei im Wesentlichen aus dem nachfolgend beschriebenen Aufbau. Zwischen zwei transparenten elektrisch leitfähigen Schichten 7 ist eine flüssigkristalline Schicht 8 abgedichtet angeordnet. Die Kontaktierung dieser flächigen Elektroden 7 ist nicht dargestellt. Die elektrisch leitfähigen Schichten 7 können hierbei als Indium-Zinn-Schicht (IT) oder Indium-Zinn-Oxyd-Schicht (ITO) ausgeführt sein. Des Weiteren ist zwischen den elektrisch leitfähigen Schichten 7 und der flüssigkristallinen Schicht 8 jeweils eine Schicht vorgesehen, die ein Ausrichten der Flüssigkristallmoleküle im Grundzustand (bei nicht angelegtem elektrischem Feld) bewirkt. Diese Schichten werden als Ausrichtschicht 9 (alignment layer) bezeichnet, die ebenfalls transparent ausgestaltet sind, und kann aus einem Polyimid bestehen. Die Flüssigkristalle der flüssigkristallinen Schicht 8 sind durch eine randseitig angeordnete umlaufende Dichtung 10 zwischen den Ausrichtschichten 9 abgedichtet aufgenommen. Die umlaufende Dichtung 10 kann über eine randseitig angeordnete ringförmige Schicht eines Klebermaterials erreicht werden. Wie es aus der Figur 2 ersichtlich ist, umfasst die flüssigkristalline Schicht 8 kugelförmig ausgestaltete Abstandselemente 11 (Spacer). In weiteren Ausführungsformen können hier auch Abstandselemente eingesetzt werden, die eine andere Form und Ausgestaltung aufweisen.

Die zuvor beschriebene Flüssigkristallzelle 6 ist zwischen zwei transparenten Trägerschichten 5, 12 angeordnet. Von der Vorderseite V der Rückspiegelanordnung aus gesehen, ist die transparente Trägerschicht 5 als Glasschicht ausgeführt. Die Glasschicht hat die Funktion eines Kratzschutzes. Als weiteres Material für die vorderseitig angeordnete transparente Trägerschicht 5 kann auch ein transparenter Kunststoff verwendet werden. Auf der der Flüssigkristallzelle 6 entgegengesetzten Seite R (zur Gehäuseinnenseite hin weisende Seite) ist die transparente Trägerschicht 12 als Folie ausgebildet. Als Material für die Folie wird hierbei eine optisch transparente Kunststofffolie 12 vorzugsweise aus einem thermoplastischen Kunstsoff wie Polyethylenterephthalat (PET), Polycarbaonat (PC) oder Polymethylmethacrylat (PMMA) verwendet. Die Folie ist rückseitig mit einer nicht transparenten reflektierenden Schicht 13 versehen. Die nicht transparente reflektierende Schicht 13 kann hierbei aus einer Beschichtung auf Silber, Aluminium oder Chrombasis bestehen. Diese Schicht wird beispielsweise durch Aufdampfen oder Sputtern oder Sprühen erzeugt. Des Weiteren ist vorzugsweise abschließend auf der zur Gehäuseinnenseite hin weisenden Seite eine Korrosionsschutzschicht 14 angeordnet.

Zusammenfassen ist nachfolgend der Schichtaufbau der Spiegelbaugruppe 2 ausgehend von der Vorderseite der Rückspiegelanordnung aufgelistet:
- transparente Trägerschicht 5 (Kratzschutz)
- elektrisch leitfähige Schicht 7 (ITO, IT)
- Ausrichtschicht 9 (PI)
- Flüssigkristalline Schicht 8 (LC)
- Ausrichtschicht 9 (PI)
- elektrisch leitfähige Schicht 7 (ITO, IT)
- transparente Trägerschicht 12 (optisch transparente Kunststofffolie)
- reflektierende Schicht 13
- eventuell Korrosionsschutzschicht 14

In einer nicht dargestellten weiteren Ausführungsform wird im Unterschied zu der zuvor beschriebenen Ausführung der Spiegelbaugruppe 2 die reflektierende Schicht als halbtransparente reflektierende Beschichtung ausgebildet. Dies ermöglicht die zusätzliche Anordnung einer Displayanordnung auf der Rückseite der Spiegelbaugruppe 2.

Bei der Herstellung der Spiegelbaugruppe 2 werden eine erste Baugruppe und eine zweite Baugruppe, wie untenstehend näher beschrieben, hergestellt In einem abschließenden Fertigungsschritt werden auf die erste oder die zweite Baugruppe die randseitige Dichtung 10 und die Flüssigkristalle 8 aufgebracht. Unter Vakuum werden die beiden Baugruppen dann blasenfrei verschlossen.

Bei der Herstellung der ersten Baugruppe wird auf der zur Vorderseite weisenden transparenten Trägerplatte 5 aus Glas oder Kunststoff die elektrisch leitfähige Schicht 7 sowie die Ausrichtschicht 9 erzeugt. Dies kann ebenfalls durch Aufdampfen, Sputtern, Aufsprühen erfolgen. Die Schichten können dabei sowohl nacheinander d.h. zuerst die elektrisch leitfähige Schicht 7 und anschließend die Ausrichteschicht 9, als auch in einem gemeinsamen Verfahrensschritt erzeugt werden.

Bei der Herstellung der zweiten Baugruppe wird auf die thermoplastische transparente Folie 12 in bekannten Verfahren eine reflektierende Beschichtung 13 durch Aufdampfen, Aufsprühen, Sputtern aufgebracht. Auf der gegenüberliegenden Seite der Folie 12 werden dann die elektrisch leitfähige Schicht 7 sowie die Ausrichtschicht 9 erzeugt. Dies kann ebenfalls durch Aufdampfen, Sputtern, Aufsprühen erfolgen. Die Schichten können dabei sowohl nacheinander d.h. zuerst die elektrisch leitfähige Schicht 7 und anschließend die Ausrichteschicht 9, als auch in einem gemeinsamen Verfahrensschritt erzeugt werden.

## Patentansprüche

1. Rückspiegelanordnung (1) für Kraftfahrzeuge, mit einem Gehäuse (3) und einer am Gehäuse (3) angeordneten eine Vorderseite und eine Rückseite aufweisende Spiegelbaugruppe (2) zur Beobachtung des nachfolgenden Verkehrs, wobei der Reflexionsgrad der Spiegelbaugruppe (2) durch eine Steuervorrichtung veränderbar ausgeführt ist, die ausgehend von der Vorderseite der Spiegelbaugruppe (2) den nachfolgenden Schichtaufbau aufweist:
- transparente Trägerschicht (5)
- elektrisch leitfähige Schicht (7)
- Ausrichtschicht (9)
- Flüssigkristalline Schicht (8)
- Ausrichtschicht (9)
- elektrisch leitfähige Schicht (7)
- optisch transparente Kunststofffolie (12)
- Reflexionsbeschichtung (13); und
wobei zwischen der transparenten Trägerschicht (5) und der optisch transparenten Kunststofffolie (12) eine elektrisch ansteuerbare Flüssigkristallzelle (6) gebildet ist, wobei die Flüssigkristallzelle (6) die flüssigkristalline Schicht (8) (LC) aufweist, die zwischen den zwei transparenten elektrisch leitfähigen Schichten (7) abgedichtet angeordnet ist, und wobei zwischen den elektrisch leitfähigen Schichten (7) und der flüssigkristallinen Schicht (8) jeweils eine Ausrichtschicht (9) vorgesehen ist, die ein Ausrichten der Flüssigkristallmoleküle bewirkt.

2. Rückspiegelanordnung (1) für Kraftfahrzeuge nach Anspruch 1, wobei die Reflexionsbeschichtung (13) aus Silber, Aluminium oder Chrommaterial besteht.

3. Rückspiegelanordnung (1) für Kraftfahrzeuge nach einem der vorangehenden Ansprüche, wobei die elektrisch leitfähige Schicht (7) als Indium-Zinn-Schicht (IT) oder Indium-Zinn-Oxyd-Schicht (ITO) ausgeführt ist.

4. Rückspiegelanordnung (1) für Kraftfahrzeuge nach einem der vorangehenden Ansprüche, wobei die optisch transparente Folie (12) aus einem thermoplastischen Kunstsoff wie Polyethylenterephthalat (PET), Polycarbaonat (PC) oder Polymethylmethacrylat (PMMA) besteht.

5. Rückspiegelanordnung (1) für Kraftfahrzeuge nach einem der vorangehenden Ansprüche, wobei die Reflexionsbeschichtung (13) als halbtransparente reflektierende Beschichtung ausgeführt ist.

6. Rückspiegelanordnung (1) für Kraftfahrzeuge nach Anspruch 5, wobei zwischen der Rückseite der Spiegelbaugruppe (2) und dem Gehäuse (3) eine Displayanordnung angeordnet ist.

7. Rückspiegelanordnung (1) für Kraftfahrzeuge nach einem der vorangehenden Ansprüche, wobei die Spiegelbaugruppe (2) als abschließende Schicht rückseitig mit einer Korrosionsschutzschicht (14) versehen ist.

8. Rückspiegelanordnung (1) für Kraftfahrzeuge nach einem der vorangehenden Ansprüche, wobei die vorderseitig angeordnete transparente Trägerschicht (5) aus Glas oder Kunststoff besteht.

9. Verfahren zur Herstellung einer Spiegelbaugruppe für eine Rückspiegelanordnung nach einem der vorangehenden Ansprüche, wobei eine erste Baugruppe hergestellt wird, und bei der Herstellung der ersten Baugruppe eine transparente Trägerschicht (5) aus Glas oder Kunststoff bereitgestellt wird, diese mit einer elektrisch leitfähige Schicht (7) sowie einer auf der elektrisch leitfähigen Schicht (7) angeordneten Ausrichtschicht (9) beschichtet wird, und weiterhin eine zweite Baugruppe hergestellt wird, und bei der Herstellung der zweiten Baugruppe eine transparente thermoplastische Folie als Trägerschicht (12) bereitgestellt wird, diese mit einer elektrisch leitfähige Schicht (7) sowie einer auf der elektrisch leitfähigen Schicht (7) angeordneten Ausrichtschicht (9) beschichtet wird und in einem abschließenden Verfahrensschritt auf die beschichtete Oberfläche der ersten oder zweiten Baugruppe randseitig angeordnet umlaufend eine Dichtung sowie innerhalb des abgedichteten Bereichs eine flüssigkristalline Schicht (8) (LC) aufgebracht wird, und die beiden Baugruppen anschließend unter Vakuum zur Spiegelbaugruppe (2) verbunden werden.

## Claims

1. Rear-view mirror arrangement (1) for motor vehicles, comprising a housing (3) and a mirror assembly (2) arranged on the housing (3) and having a front side and a rear side, for observing following traffic, wherein the reflectance of the mirror assembly (2) is embodied such that it is variable by a control device, comprising the following layer structure proceeding from the front side of the mirror assembly (2):
- transparent carrier layer (5)
- electrically conductive layer (7)
- alignment layer (9)
- liquid crystalline layer (8)
- alignment layer (9)
- electrically conductive layer (7)
- optically transparent plastic film (12)
- reflection coating (13); and
wherein an electrically drivable liquid crystal cell (6) is formed between the transparent carrier layer (5) and the optically transparent plastic film (12), wherein the liquid crystal cell (6) has the liquid crystalline layer (8) (LC) arranged in a sealed fashion between the two transparent electrically conductive layers (7) and wherein an alignment layer (9) is in each case provided between the electrically conductive layers (7) and the liquid crystalline layer (8), said alignment layer bringing about alignment of the liquid crystal molecules.

2. Rear-view mirror arrangement (1) for motor vehicles according to Claim 1, wherein the reflection coating (13) consists of silver, aluminum or chromium material.

3. Rear-view mirror arrangement (1) for motor vehicles according to either of the preceding claims, wherein the electrically conductive layer (7) is embodied as an indium tin layer (IT) or indium tin oxide layer (ITO).

4. Rear-view mirror arrangement (1) for motor vehicles according to any of the preceding claims, wherein the optically transparent film (12) consists of a thermoplastic such as polyethylene terephthalate (PET), polycarbonate (PC) or polymethyl methacrylate (PMMA).

5. Rear-view mirror arrangement (1) for motor vehicles according to any of the preceding claims, wherein the reflection coating (13) is embodied as a semitransparent reflective coating.

6. Rear-view mirror arrangement (1) for motor vehicles according to Claim 5, wherein a display arrangement is arranged between the rear side of the mirror assembly (2) and the housing (3).

7. Rear-view mirror arrangement (1) for motor vehicles according to any of the preceding claims, wherein the mirror assembly (2) is provided with an anti-corrosion protective layer (14) on the rear side as terminating layer.

8. Rear-view mirror arrangement (1) for motor vehicles according to any of the preceding claims, wherein the transparent carrier layer (5) arranged on the front side consists of glass or plastic.

9. Method for producing a mirror assembly for a rear-view mirror arrangement according to any of the preceding claims, wherein a first assembly is produced, and, during the production of the first assembly, a transparent carrier layer (5) composed of glass or plastic is provided and is coated with an electrically conductive layer (7) and also an alignment layer (9) arranged on the electrically conductive layer (7), and furthermore a second assembly is produced, and, during the production of the second assembly, a transparent thermoplastic film is provided as carrier layer (12), the latter is coated with an electrically conductive layer (7) and also an alignment layer (9) arranged on the electrically conductive layer (7) and a concluding method step involves applying to the coated surface of the first or second assembly in a manner arranged marginally in a circumferential fashion a seal and also a liquid crystalline layer (8) (LC) within the sealed region, and the two assemblies are subsequently connected under vacuum to form the mirror assembly (2).

## Revendications

1. Agencement de rétroviseur (1) pour véhicules automobiles, avec un boîtier (3) et un module de miroir (2) disposé au niveau du boîtier (3) et comportant un côté avant et un côté arrière pour observer le trafic derrière le véhicule, le degré de réflexion du module de miroir (2) pouvant varier du fait d'un dispositif de commande présentant, à partir du côté avant du module de miroir (2), la structure en couches suivante :
- couche de support transparente (5)
- couche électriquement conductrice (7)
- couche d'orientation (9)
- couche de cristaux liquides (8)
- couche d'orientation (9)
- couche électriquement conductrice (7)
- film en plastique optiquement transparent (12)
- revêtement de réflexion (13); et
une cellule de cristal liquide (6) pouvant être commandée électriquement étant formée entre la couche de support transparente (5) et le film en plastique optiquement transparent (12), la cellule de cristal liquide (6) comportant la couche de cristaux liquides (8) (LC) disposée de façon étanche entre les deux couches électriquement conductrices (7) transparentes et une couche d'orientation (9) étant respectivement prévue entre les couches électriquement conductrices (7) et la couche de cristaux liquides (8) réalisant une orientation de la molécule de cristal liquide.

2. Agencement de rétroviseur (1) pour véhicules automobiles selon la revendication 1, le revêtement de réflexion (13) étant en argent, en aluminium ou en chrome.

3. Agencement de rétroviseur (1) pour véhicules automobiles selon l'une quelconque des revendications précédentes, la couche électriquement conductrice (7) étant réalisée sous la forme d'une couche en indium-étain (IT) ou d'une couche en indium-oxyde d'étain (ITO).

4. Agencement de rétroviseur (1) pour véhicules automobiles selon l'une quelconque des revendications précédentes, le film optiquement transparent (12) étant réalisé à partir d'une matière thermoplastique telle que le polyéthylène téréphtalate (PET), le polycarbonate (PC) ou le polyméthacrylate de méthyle (PMMA).

5. Agencement de rétroviseur (1) pour véhicules automobiles selon l'une quelconque des revendications précédentes, le revêtement de réflexion (13) étant réalisé sous la forme d'un revêtement réfléchissant semi-transparent.

6. Agencement de rétroviseur (1) pour véhicules automobiles selon la revendication 5, un agencement d'affichage étant disposé entre le côté arrière du module de miroir (2) et le boîtier (3).

7. Agencement de rétroviseur (1) pour véhicules automobiles selon l'une quelconque des revendications précédentes, le module de miroir (2) réalisé sous la forme d'une couche terminale du côté arrière étant pourvu d'une couche anti-corrosion (14).

8. Agencement de rétroviseur (1) pour véhicules automobiles selon l'une quelconque des revendications précédentes, la couche de support transparente (5) disposée sur le côté avant étant en verre ou en matière plastique.

9. Procédé de fabrication d'un module de miroir pour un agencement de rétroviseur selon l'une quelconque des revendications précédentes, un premier module étant fabriqué, et lors de la fabrication du premier module, une couche de support transparente (5) en verre ou en matière plastique étant mise à disposition, cette couche étant revêtue d'une couche électriquement conductrice (7) ainsi que d'une couche d'orientation (9) disposée sur la couche électriquement conductrice (7) et en outre un deuxième module étant fabriqué et, lors de la fabrication du deuxième module, un film thermoplastique transparent réalisé sous forme d'une couche de support (12) étant mis à disposition, ce film étant revêtu d'une couche électriquement conductrice (7) ainsi que d'une couche d'orientation (9) disposée sur la couche électriquement conductrice (7) et lors d'une étape de procédé ultérieure, un joint ainsi que, à l'intérieur de la zone étanchéifiée, une couche de cristaux liquides (8) (LC) étant appliqués tout autour sur la surface revêtue du premier ou du deuxième module du côté de bordure et les deux modules étant ensuite reliés sous vide pour former le module de miroir (2).
